# FASCICULE DE BREVET EUROPEEN

(11) **EP 0 497 670 B1**
(45) Date de publication et mention de la délivrance du brevet: **26.06.1996**
(21) Numéro de dépôt: 92400189.4
(22) Date de dépôt: 24.01.1992
(51) Int. Cl.: H04Q 11/00, H04L 12/56

(54) **Concentrateur photonique**
Optischer Konzentrator
Optical concentrator

(30) Priorité: 29.01.1991 FR 9100980
(43) Date de publication de la demande: 05.08.1992
(73) Titulaire: ALCATEL CIT, F-75008 Paris (FR)
(72) Inventeur: Jacob, Jean-Baptiste, F-22700 Perros-Guirec (FR); Le Roy, Guy, F-22300 Lannion (FR); Gabriagues, Jean-Michel, F-91530 Le Val Saint-Germain (FR)
(74) Mandataire: Sciaux, Edmond

(56) Documents cités:
- EP-A- 0 282 071
- EP-A- 0 351 729
- IEEE JOURNAL ON SELECTED AREAS IN COMMUNICATIONS, vol. 6, no. 7, août 1988, pages 1096-1106, New York, US; R.A. THOMPSON: "Architectures with improved signal-to-noise ratio in photonic systems with fiber-loop delay lines"
- PATENT ABSTRACTS OF JAPAN, vol. 10, no. 228 (E-426)[2284], 8 août 1986 & JP-A-6161596
- ELECTRONICS LETTERS, vol. 26, no. 22, 25 octobre 1990, pages 1895-1896, Stevenage, GB; M. TSUKADA et al.: "40 Gbit/s optial time-division cell multiplexer for a photonic ATM switch"

## Description

L'invention concerne un concentrateur photonique, pour raccorder à un réseau de télécommunications des terminaux d'abonné utilisant un multiplexage temporel asynchrone. Ce type de multiplexage permet de transmettre tous les types d'informations sous une forme unique constituée de paquets de bits, de longueur fixe, appelés cellules. Il est connu de raccorder des terminaux d'abonné à un réseau de télécommunications, par l'intermédiaire notamment de concentrateurs ayant pour rôle de concentrer les communications de circuits d'abonné peu chargés, sur des multiplex plus chargés. Inversement, un concentrateur prélève des communications sur un multiplex chargé et les transfère sur une ligne reliée à un terminal d'abonné et qui est peu chargée.

La demande de brevet français n°2 646 036 décrit un centre satellite numérique réalisé uniquement en technologie électronique et comportant une pluralité de concentrateurs pour raccorder à un réseau de télécommunications des terminaux d'abonné utilisant notamment le multiplexage temporel asynchrone. Dans ces concentrateurs de type connu, chaque concentrateur comporte des circuits d'accès d'abonné et deux étages de concentrations.

Chaque circuit d'accès d'abonné réalise notamment les fonctions suivantes :
- une conversion optique-électronique, et la conversion inverse, pour chaque terminal d'abonné qui est relié au concentrateur par une ligne à fibre optique;
- une délimitation des cellules reçues du terminal d'abonné, c'est-à-dire un repérage du début de chaque cellule;
- un désembrouillage du champ de données de chaque cellule reçue d'un terminal d'abonné;
- un embrouillage du champ de données de chaque cellule émise par le concentrateur à destination d'un terminal d'abonné;
- un calcul de mot de détection d'erreur, portant sur l'en-tête de chaque cellule émise du concentrateur vers un terminal d'abonné, ou reçue d'un terminal d'abonné;
- une remise en phase des cellules émises par un terminal d'abonné, par rapport à une base de temps locale, du centre satellite;
- une fonction police, consistant à surveiller les débits émis par les terminaux d'abonné;
- une extraction de cellules de signalisation, parmi les cellules émises par un terminal d'abonné, et une injection de cellules de signalisation parmi les cellules émises par le concentrateur à destination d'un terminal d'abonné;
- une conversion des étiquettes de circuit virtuel et de faisceau virtuel que comporte chaque cellule émise par un terminal d'abonné;
- un calcul d'étiquette de routage, pour router chaque cellule dans le réseau de connexion; et insertion de cette étiquette devant l'entête de la cellule;
- une élimination des cellules vides émises par un terminal d'abonné;
- une insertion de cellules vides parmi les cellules émises du concentrateur vers les terminaux d'abonnés.

Le premier étage de concentration comporte une matrice de commutation temporelle asynchrone, commandée par un micro-processeur. Le second étage de concentration comporte une autre matrice de commutation temporelle asynchrone, ou un multiplexeur-démultiplexeur temporel, commandé par un microprocesseur.

La structure de ce concentrateur est optimisée pour utiliser des composants électroniques, mais elle n'est pas optimale pour utiliser des composants photoniques. Ceux-ci présentent l'avantage d'une plus grande rapidité, et autorisent un multiplexage spectral. Conserver la structure des concentrateurs de type connu conduirait à une sous-utilisation des performances de la technologie photonique.

Le but de l'invention est de proposer un concentrateur photonique ayant une structure qui ne soit pas simplement déduite de la structure d'un concentrateur électronique, connue, mais qui soit optimisée pour l'utilisation de composants photoniques.

L'objet de l'invention est un concentrateur photonique, pour raccorder à un réseau de télécommunication des terminaux d'abonné émettant et recevant des données sous la forme de cellules, de longueur fixe, par un multiplexage temporel asynchrone, caractérisé en ce que pour traiter des cellules en provenance de terminaux d'abonné, il comporte des moyens (31.1,...,31.16) pour multiplexer temporellement et spectralement des cellules en provenance de terminaux d'abonné; et comporte des moyens (33.1,...,33.16) pour mettre en phase, par rapport à une horloge locale, les cellules ayant été multiplexées par les moyens (31.1,...,31.16) pour multiplexer temporellement et spectralement.

Le concentrateur photonique ainsi caractérisé est particulièrement simple à réaliser car le multiplexage spectral réalisé par les moyens pour multiplexer spectralement les cellules en provenance des terminaux d'abonné, permet de diviser par seize, par exemple, le nombre de dispositifs de mise en phase des cellules par rapport à une horloge locale.

Selon une autre caractéristique un concentrateur photonique selon l'invention est caractérisé en ce que pour traiter des cellules en provenance de terminaux d'abonné, il comporte en outre:
- des moyens pour multiplexer spectralement les cellules ayant été remises en phase, et pour multiplier leur débit;
- des moyens pour multiplexer temporellement, sans multiplexage spectral, des cellules ayant été restituées par les moyens pour multiplexer spectralement et pour multiplier le débit.

Le concentrateur ainsi caractérisé peut être relié à un réseau de télécommunications par des multiplex normalisés, à multiplexage temporel asynchrone, grâce aux moyens pour multiplier le débit et grâce aux moyens pour multiplexer temporellement, sans multiplexage spectral. D'autre part, le concentrateur ainsi caractérisé est compatible avec n'importe quel centre de rattachement utilisant la technique de transfert temporel asynchrone, qu'il soit en technologie électronique ou en technologie photonique.

Selon une autre caractéristique, un concentrateur photonique selon l'invention est caractérisé en ce que, pour traiter des cellules à destination de terminaux d'abonné, il comporte :
- des moyens pour démultiplexer temporellement ces cellules et les multiplexer spectralement;
- des moyens pour diviser le débit des cellules ayant été démultiplexées temporellement et multiplexées spectralement;
- et des moyens pour démultiplexer spectralement des cellules dont le débit a été divisé.

Le concentrateur photonique ainsi caractérisé peut être réalisé de manière particulièrement simple car les moyens pour diviser le débit peuvent être communs à une pluralité de terminaux d'abonné, puisqu'ils traitent des cellules qui sont multiplexées spectralement, par exemple au moyen de seize longueurs d'ondes différentes.

Selon une autre caractéristique, le concentrateur photonique selon l'invention est caractérisé en ce que les moyens pour démultiplexer temporellement et multiplexer spectralement des cellules à destination de terminaux d'abonné ont un fonctionnement périodique, les cellules fournies à ce concentrateur par un réseau de télécommunications ayant été remises dans un ordre donné, avant d'être fournies audit concentrateur.

Le concentrateur photonique ainsi caractérisé est particulièrement simple à réaliser puisqu'il ne nécessite pas un étage de remise en ordre des cellules, en amont des moyens pour démultiplexer temporellement et multiplexer spectralement les cellules fournies par le réseau de télécommunications. D'autre part, cette remise en ordre permet de simplifier beaucoup le multiplexage temporel puisque celui-ci peut être réalisé de manière périodique.

L'invention sera mieux comprise et d'autres détails apparaîtront à l'aide de la description ci-dessous et des figures l'accompagnant :
- la figure 1 représente le schéma synoptique d'un exemple de réalisation du concentrateur photonique selon l'invention;
- la figure 2 représente un schéma synoptique d'un exemple de réalisation d'un étage que comporte ce concentrateur et qui réalise une première concentration par multiplexage temporel et spectral, statistique, non synchrone;
- la figure 3 représente le schéma synoptique d'un exemple de réalisation d'un étage que comporte ce concentrateur et qui réalise une remise en phase des cellules, par rapport à une horloge locale;
- les figures 4 et 5 représentent les schémas synoptiques de deux exemples de réalisation d'un étage que comporte ce concentrateur et qui réalise une multiplication du débit des cellules en provenance de terminaux d'abonné;
- la figure 6 représente le schéma synoptique d'un exemple de réalisation d'un étage que comporte ce concentrateur et qui réalise une seconde concentration par multiplexage temporel périodique;
- la figure 7 représente le schéma synoptique d'un exemple de réalisation d'un étage que comporte ce concentrateur et qui réalise une première déconcentration des cellules en provenance du réseau de télécommunications et à destination de terminaux d'abonné, par démultiplexage temporel périodique et multiplexage spectral;
- les figures 8 et 9 représentent les schémas synoptiques de deux exemples de réalisation d'un étage de division de débit que comporte ce concentrateur pour traiter des cellules à destination de terminaux d'abonné;
- la figure 10 représente le schéma synoptique d'un exemple de réalisation d'un étage que comporte ce concentrateur, et qui réalise une seconde déconcentration par un démultiplexage spectral des cellules à destination de terminaux d'abonné, et qui réalise en outre un ajustement de débit.

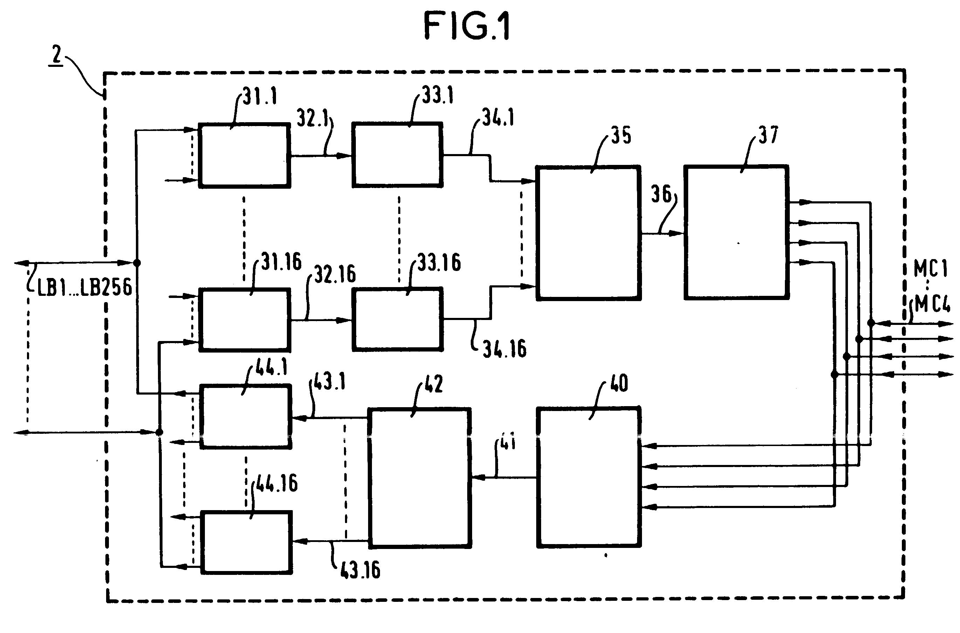

La figure 1 représente le schéma synoptique d'un exemple de réalisation, 2, d'un concentrateur selon l'invention. Il comprend, en parallèle, deux séries d'étages traitant respectivement les cellules en provenance et à destination des circuits d'accès d'abonné. Les cellules en provenance de 256 circuits d'accès d'abonné, par les 256 lignes LB1,...,LB256, sont traitées tout d'abord par un étage 31 constitué de seize modules 31.1 à 31.16 en parallèle. Ces seize modules possèdent chacun seize entrées reliées à seize lignes parmi les lignes LB1,..., LB256. Considérons, à titre d'exemple le module 31.1. Il réalise, pour seize lignes LB1,..., LB16 une première concentration par un multiplexage temporel et spectral, statistique, non synchrone. Le module 31.1 fournit sur une fibre optique unique 32.1, avec un débit de 622 Mb/s, des cellules codées sur 16 longueurs d'ondes différentes, autrement dit 16 couleurs.

Ces cellules sont traitées ensuite par un étage 33 de remise en phase par rapport à une horloge locale du centre satellite L'étage 33 est constitué de seize modules 33.1 à 33.16, en parallèle. Ces seize modules possèdent chacun une entrée reliée respectivement à une sortie d'un module 31.1 à 31.16. Par exemple, le module 33.1 remet en phase des cellules fournies par le module 31.1 via la fibre optique 32.1. A la sortie de ce module 33.1, une fibre optique 34.1 achemine les cellules, remises en phase, vers un étage 35 de multiplexage spectral et de changement de débit. L'étage 35 possède seize entrées reliées respectivement aux sorties des 16 modules 33.1 à 33.16 par seize fibres optiques 34.1 à 34.16. Sur chacune de ses entrées, il reçoit des cellules pouvant prendre 16 couleurs, avec un débit 622 Mb/s, et il restitue sur une sortie unique des cellules de 16 couleurs à 2,6 Gb/s. Une fibre optique 36 transmet ces cellules à un étage 37 de multiplexge temporel périodique, pour répartir ces cellules sur quatre multiplex MC1,..., MC4, à un débit de 2, 6 Gb/s et avec une charge de 0, 4 erlang.

Les cellules sont multiplexées spectralement dans l'étage 31 pour diviser par seize le nombre de modules de l'étage 33 de remise en phase et de l'étage 35 de changement de débit. Les cellules restituées par l'étage 33 sont remultiplexées spectralement par l'étage 35, de façon à attribuer seize couleurs différentes, les unes des autres, respectivement aux seize cellules reçues sur les seize entrées de l'étage 35. Grâce à ce remultiplexage spectral, il est possible d'utiliser un seul module, dans l'étage 35, pour traiter les cellules provenant des seizes modules 33.1 à 33.16 qui correspondent à 256 terminaux d'abonné.

Par contre, ce multiplexage spectral ne peut pas être conservé en aval. C'est pourquoi il est prévu un étage 37 qui remplace le multiplexage spectral de 16 couleurs, sur la fibre optique 36, par un multiplexage temporel périodique sur quatre fibres optiques. Les cellules émises sur ces quatre fibres, constituant les multiplex MC1,..., MC4, peuvent avoir des couleurs quelconques, ces couleurs ne sont plus significatives d'un multiplexage spectral.

Les cellules en provenance d'un réseau de télécommunications non représenté, et à destination de 256 terminaux d'abonné, sont fournies à un étage 40 par les multiplex MC1,..., MC4. Ces cellule ont été mises en ordre par le réseau de telle sorte qu'elles puissent être démultiplexées temporellement par un simple démultiplexage temporel périodique. L'étage 40 réalise une première déconcentration par un démultiplexage temporel périodique, et réalise un multiplexage spectral permettant de simplifier les étages situés en aval.

Les cellules arrivant du réseau peuvent avoir une couleur quelconque. L'étage 40 les regroupe sur une seule fibre 41 en leur attribuant seize couleurs différentes. Le débit de 2,6 Gb/s est conservé, par conséquent chaque paquet de seize cellules colorées de seize couleurs différentes est suivi d'un intervalle vide, de durée égale à trois périodes de cellule.

Puis un étage 42 fait un changement de débit de 2,6 Gb/s à 657 Mb/s et un premier démultiplexage spectral. Seize fibres optiques 43.1 à 43.16 transmettent à un étage 44 les cellules fournies par l'étage 42, et qui sont multiplexées spectralement sur 16 couleurs différentes avec un débit de 657 Mb/S. L'étage 44 comporte seize modules 44.1 à 44.16 en parallèle. Chaque module réalise une deuxième déconcentration par un second démultiplexage spectral. Chaque module fournit des cellules à 16 lignes parmi les 256 lignes LB1,..., LB256. Il réalise un ajustement de débit à 622 Mb/s, consistant à supprimer 24 bits d'étiquette de routage, adjoints à chaque cellule, qui ne sont pas utiles au-delà de cet étage 44.

Il apparaît que chaque module 33.1,..., 33.16 de remise en phase est en aval d'un module 31.1,..., 31.16 de multiplexage temporel et spectral, qui réalise une première concentration correspondant à 16 terminaux d'abonnés. Par conséquent, un concentrateur selon l'invention nécessite seize fois moins de modules 33.1,..., 33.16 de remise en phase, qu'un concentrateur de type connu.

Grâce au multiplexage spectral, l'étage de changement de débit, 35, est commun pour seize modules 32.1 à 33.16 qui correspondent à 256 terminaux d'abonné. Par conséquent, un concentrateur selon l'invention nécessite 256 fois moins de dispositifs 35 de chargement de débit, qu'un concentrateur de type connu.

Grâce au multiplexage spectral réalisé par l'étage 40 en amont de l'étage 42 de changement de débit, ce dernier est commun à 256 terminaux d'abonné. Au contraire, il devrait être dupliqué seize fois s'il n'y avait par de multiplexage spectral.

Grâce au multiplexage spectral subsistant jusqu'à l'étage 44 la fonction ajustement de débit est réalisée dans chaque module 44.1 à 44.16 pour seize terminaux d'abonné.

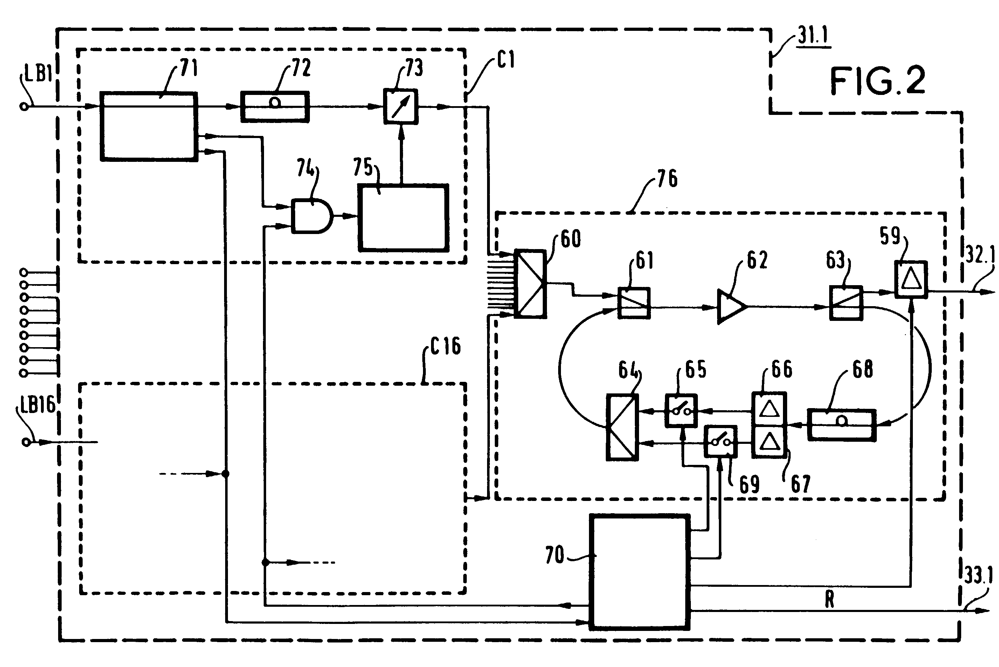

La figure 2 représente le schéma synoptique plus détaillée d'un exemple de réalisation du module 31.1 de l'étage 31 du concentrateur 2, qui réalise une première concentration des cellules en provenance des terminaux d'abonné, par un multiplexage temporel et spectral, statistique, non synchrone. Ce module 31.1 comprend : une première partie constituée de 16 codeurs C1 à C16, chacun permettant de coder une cellule avec une longueur d'onde différente choisie parmi 16; une seconde partie comportant une mémoire tampon 76 permettant d'inscrire et de lire 16 cellules codées par les 16 longueurs d'onde mentionnées précédemment; et un dispositif électronique de commande, 70, comportant une horloge locale.

Une entrée de chacun des codeurs C1 à C16 est reliée respectivement à l'une des lignes LB1 à LB16. Une sortie de chacun des codeurs est reliée à une entrée de la mémoire tampon 76.

La mémoire tampon 76 comporte :
- un filtre 59 commandable électriquement;
- un combineur 60 ayant seize entrées constituant les entrées de la mémoire tampon 76;
- deux coupleurs, 61 et 63, à trois accès;
- un amplificateur optique 62;
- un combineur 64 à deux entrées;
- deux portes optiques, 65 et 69, commandables électriquemnt;
- deux filtres périodiques, 66 et 67;
- une ligne à retard optique, 68, procurant un retard égal à la durée d'une cellule à 622 Mb/s.

Une sortie du combineur 60 est reliée à un premier accès d'un coupleur 61. Un deuxième accès du coupleur 61 est relié à une entrée de l'amplificateur optique 62. Une sortie de ce dernier est reliée à un premier accès du coupleur 63. Un deuxième accès de ce dernier constitue la sortie de la mémoire-tampon 76 et est relié à une entrée du filtre 59. La sortie du filtre 59 constitue la sortie de la mémoire 76 et du module 31.1.

Un troisième accès du coupleur 63 est relié à une première extrémité de la ligne à retard 68. Une seconde extrémité de la ligne à retard 68 est reliée aux deux filtres 66, 67 en parallèle. Ces deux filtres couvrent chacun une bande de longueurs d'onde comportant huit des longueurs d'onde utilisées pour coder les cellules. Ces filtres permettent donc d'éliminer les 16 longueurs d'onde, par groupes de 8. Le filtre 66 est relié à la porte optique 65. Le filtre 67 est relié à la porte 69. Les sorties des portes 65 et 69 sont reliées aux entrées du combineur 64. Une sortie de ce dernier est reliée au troisième accès du coupleur 61.

Un dispositif électronique de commande, 70, possède : deux sorties reliées respectivement à deux entrées de commande des portes 65 et 69, une sortie reliée à une entrée de commande commune à chacun des codeurs C1 à C16, une sortie reliée au module 33.1, et une entrée recevant des signaux de détection de cellules fournis par une sortie commune aux 16 codeurs C1 à C16.

Chaque codeur, par exemple le codeur C1, comporte :
- un dispositif 71 de détection de cellules, comportant une partie optique, non représentée, qui est traversée par le signal optique transportant les cellules et une partie électronique, non représentée, capable de reconnaître le début d'une cellule;
- une ligne à retard 72 retardant le signal optique issu du dispositif 71, pour laisser du temps de calcul à la partie électronique du dispositif 71 et au dispositif 70;
- un convertisseur de longueur d'onde 73 ayant : une entrée recevant un signal optique fourni par une sortie de la ligne à retard 72, une entrée de commande électrique, et une sortie constituant la sortie du codeur et fournissant un signal optique au combineur 60;
- une porte ET 74, électronique;
- et un circuit électronique de commande 75 qui fournit le signal de commande du convertisseur de longueur d'onde 73.

La porte ET 74 possède : une première entrée qui constitue l'entrée de commande du codeur, recevant un signal de commande fourni par le dispositif 70 pour déterminer la longueur d'onde du signal sortant du codeur; une deuxième entrée reliée à une sortie du dispositif 71 de détection de cellules, qui fournit un signal pour valider cette porte; et une sortie reliée à une entrée du circuit électronique de commande 75. La partie électronique du dispositif 71 comporte une sortie qui fournit un signal de détection de cellules à la sortie commune des codeurs, reliée à l'entrée du dispositif de commande 70.

Lorsqu'une cellule est détectée par le dispositif 71, le dispositif de commande 70 choisit la longueur d'onde avec laquelle cette cellule va être codée et transmet un message à l'entrée commune des codeurs C1 à C16. Ce message est transmis dans le codeur ayant reçu la cellule, la porte ET 74 étant validée dans ce codeur par le dispositif 71 de détection de cellules, et les portes homologues étant inhibées dans les autres codeurs. La cellule ainsi codée par une couleur est stockée dans la mémoire tampon 76.

Le dispositif 70 mesure l'écart de phase entre chaque début de cellule, et l'horloge locale. Il détermine la valeur R du retard à appliquer à chaque cellule pour la remettre en phase par rapport à cette horloge locale, puis transmet cette valeur au module 33.1 juste avant de lui transmettre la cellule correspondante.

Le fonctionnement de la mémoire tampon 76 est le suivant. Elle est constituée d'une boucle pouvant stocker jusqu'à seize cellules ayant respectivement seize couleurs différentes. L'amplificateur 62 régénère un signal optique chaque fois qu'il a fait un tour dans la mémoire tampon 76. Le retard procuré par la ligne à retard 68 correspond à une cellule. La lecture d'une cellule parmi 16 cellules stockées dans la mémoire tampon est réalisée par filtrage dans le filtre 59 pour ne lire qu'une cellule à la fois. L'effacement de la mémoire tampon 76 est réalisé par moitié, en effaçant huit cellules codées sur huit longueurs d'onde, pendant que huit autres cellules sont en cours d'inscription sur huit autres longueurs d'onde. Pour réaliser cette écriture et cet effacement par moitié, les portes optiques 65 et 69 sont alternativement ouvertes et fermées par le dispositif 70.

A ce stade, les cellules en provenance de 16 terminaux d'abonné sont concentrées sur la fibre optique unique 32.1 par un multiplexage spectral sur 16 longueurs d'ondes, mais elles ne sont pas synchronisées par rapport à l'horloge locale.

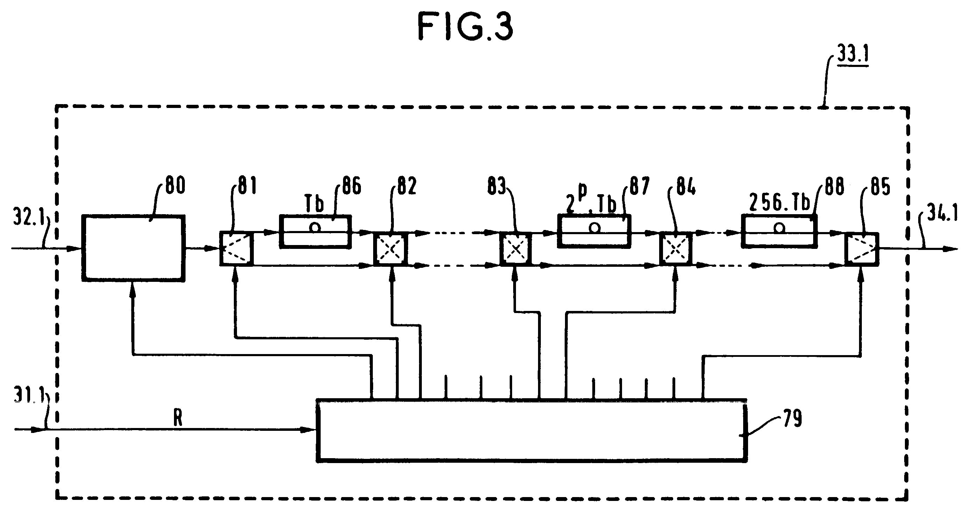

La figure 3 représente le schéma synoptique plus détaillé du module 33.1 de l'étage 33 du concentrateur 2, pour la remise en phase des cellules par rapport à l'horloge locale. Ce module 33.1 traite les cellules une par une. Il comprend :
- une ligne à retard réglable 80, commandable pour réaliser un retard compris entre 0 et Tb , Tb étant la période de bit;
- deux coupleurs, 81 et 85, ayant trois accès et étant commandables électriquement pour aiguiller un signal, fourni à une entrée, vers une sortie choisie parmi deux;
- 9 lignes à retard fixe, 86,..., 87,..., 88 réalisant des retards égaux à Tb, ..., 2^{p}.Tb, ..., 256Tb; p variant de 0 à 8;
- 8 coupleurs à quatre accès, 82,..., 83,84, commandables électriquement pour aiguiller un signal fourni à une entrée quelconque parmi deux, vers une sortie choisie parmi deux;
- un dispositif de commande 79, relié au dispositif de commande 70 du module 31.1 pour recevoir la valeur R du retard à appliquer à chaque cellule.

La fibre 32.1 est reliée à une entrée de la ligne à retard 80. Une sortie de la ligne 80 est reliée à une entrée du coupleur 81. Le coupleur 81 transmet les cellules restituées par la ligne à retard 80, soit à une première entrée du coupleur 82 via la ligne à retard 86, soit directement à une deuxième entrée du coupleur 82. Ce dernier transmet les cellules soit sur sa première sortie, soit sur sa seconde sortie. Quand les cellules arrivent au coupleur 83, celui-ci les transmet soit à la première entrée du coupleur 84 via la ligne à retard 87, soit directement à la seconde entrée du coupleur 84. Les cellules sont transmises ainsi d'étage en étage jusqu'au coupleur 85 qui ne comporte que trois accès, une première entrée étant reliée à la sortie de la ligne à retard 88, une seconde entrée étant reliée directement à un autre coupleur en amont, et une sortie constituant la sortie de l'étage 33, reliée à la fibre optique 34.1. La ligne à retard réglable 80 et les coupleurs 80 à 85 possèdent des entrées de commande reliées respectivement à des sorties du dispositif de commande 79.

Chaque cellule comportant 424 bits à ce stade. Il est nécessaire de pouvoir retarder tous les bits d'une cellule d'un retard variable entre 0 et 424Tb. Le nombre 424 étant compris entre 256 et 512, l'étage 33 comporte 9 lignes à retard fixe, de valeur Tb, 2Tb, 4Tb, 8Tb, 16Tb, 32 Tb, 64Tb, 128 Tb, 256Tb, permettant de réaliser toutes les valeurs de retard comprises entre Tb et 512Tb, en combinant en série certaines des lignes à retard et en court-circuitant les autres, au moyen des coupleurs 82, 83, ..., 84, commandables électriquement par le dispostif 79. La ligne à retard réglable 80 permet d'affiner la remise en phase. Les cellules sortant sur la fibre 34.1 sont ainsi cadrées sur la période de cellule de l'horloge locale.

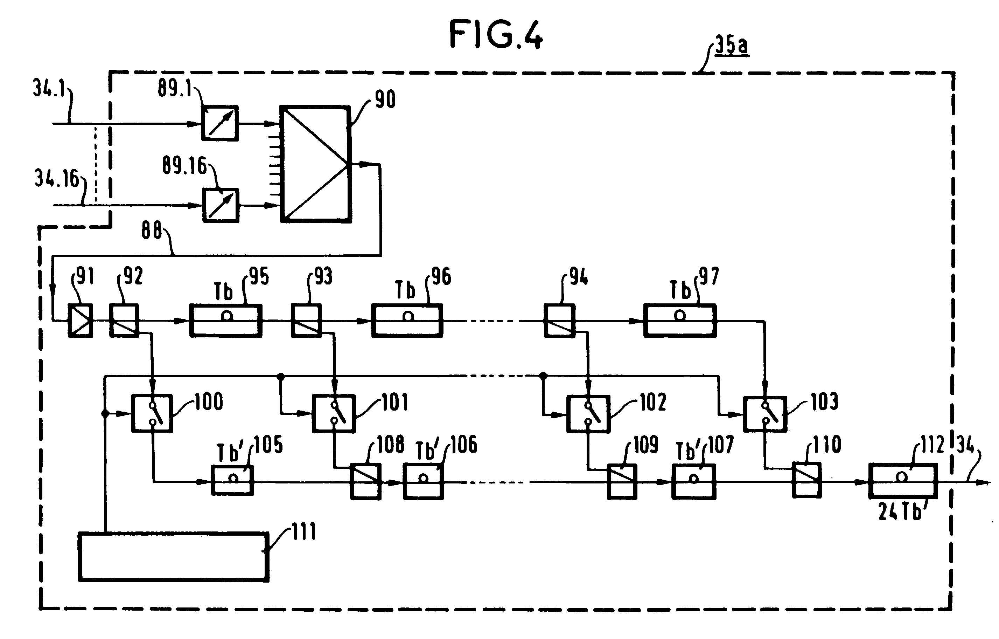

La figure 4 représente le schéma synoptique d'un premier exemple, 35a, de réalisation de l'étage 35 de multiplexage spectral et de changement de débit, opérant cellule par cellule, pour amener le débit de 622 Mb/s à 2,6 Gb/s. En fait, il traite simultanément 16 cellules, car les seize modules de l'étage 33 lui fournissent simultanément seize cellules codées par seize couleurs pas forcément différentes. C'est pourquoi, sa première fonction consiste à refaire un multiplexage spectral sur seize couleurs, différentes les unes des autres.

Cet exemple de réalisation comporte :
- seize convertisseurs de longueur d'onde, 89.1 à 89.16, ayant seize entrées reliées respectivement aux seize fibres 34.1 à 34.16, pour attribuer seize couleurs différentes aux seize cellules fournies par les modules 33.1 à 33.16;
- un combineur, 90, à seize entrées reliées respectivement aux seize sorties des convertisseurs 89.1 à 89.16;
- un amplificateur optique 91;
- un premier jeu de 424 lignes à retard, 95, 96,...,97, procurant chacune un retard égal à la période Tb des bits pour le débit de 622 Mb/s;
- un second jeu de 424 lignes à retard, 105, 106,..., 107, procurant chacune un retard égal à la période T'b des bits pour le débit de 2,6 Gb/s;
- 424 coupleurs à trois accès 92, 93,..., 94, qui sont intercalés entre les lignes à retard du premier jeu;
- 424 coupleurs à trois accès, 108,...,109, 110, qui sont intercalés entre les lignes à retard du second jeu;
- 424 portes optiques, 100, 101,..., 102, 103;
- un dispositif de commande 111 commandant en parallèle toutes les portes optiques 100,..., à 103;
- une ligne à retard 112 procurant un retard égal à 24.Tb'.

La sortie du combineur 90 est reliée à l'entrée de l'amplificateur 91. La sortie de ce dernier est reliée au premier jeu de lignes à retard, par l'intermédiaire du coupleur 92. Une première sortie de chacun des coupleurs 92 à 94 est reliée respectivement à une entrée des portes 100,...,102. La sortie de la ligne à retard 97 est reliée à une entrée de la porte 103. Une sortie de chacune des portes 101,..., 102 est reliée respectivement à une entrée de l'un des coupleurs 108,..., 109. Une sortie de la porte 100 est reliée à une entrée de la ligne à retard 105.

Le jeu de lignes à retard 95 à 97 constitue un premier registre à décalage ayant des sorties parallèles. Le second jeu de lignes à retards 105 à 107 constitue un second registre à décalage ayant des entrées parallèles. Les portes 100,..., 103 permettent de transférer le contenu du premier registre vers le second registre. Dans le premier registre, les bits de la cellule sont séparés par des intervalles de temps Tb correspondant au débit de 622 Mb/s. Lorsqu'une cellule complète est présente dans le premier registre, ses bits sont transférés simultanément dans le second registre. Les bits de cette cellule sont séparées dans le second registre d'un intervalle T'b correspondant au débit de 2,6 Gb/s. La cellule devient alors une cellule au débit de 2,6 Gb/s, et elle est fournie à la ligne à retard 112 par la sortie du coupleur 110. La ligne à retard 112 crée un espace vide en tête de chaque cellule, qui permet d'insérer ultérieurement 24 bits de routage qui seront utilisés pour aiguiller chaque cellule à travers des étages de commutation. Chaque cellule devient une cellule à 448 bits. Les cellules fournies par l'étage 35 sont sous la forme de paquets de seize cellules synchrones ayant seize couleurs différentes, les unes des autres. Deux paquets successifs sont séparés par un intervalle libre, de durée approximativement égale à trois fois la durée d'un paquet, car le débit a été multiplié par quatre environ.

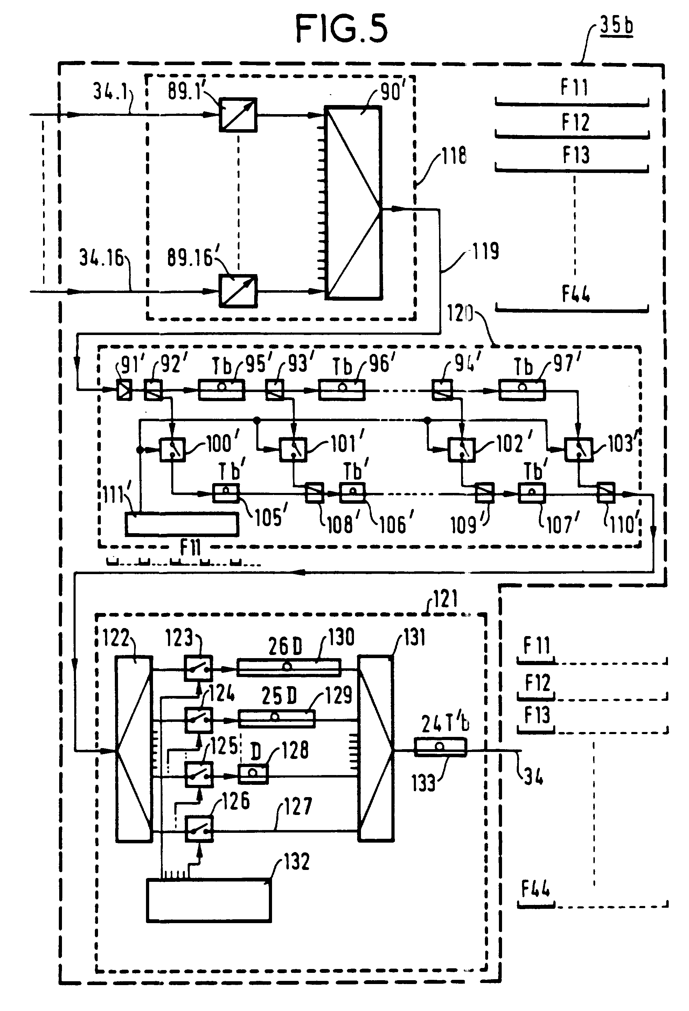

La figure 5 représente le schéma synoptique d'un second exemple de réalisation, 35b, de l'étage 35 de multiplexage spectral et de changement de débit. Cet exemple de réalisation opère par blocs de 16 bits au lieu d'opérer par cellules de 424 bits, ce qui conduit à une importante réduction du nombre des composants nécessaires pour réaliser cet étage de changement de débit. Chaque cellule de 424 bits est découpée en vingt huit blocs de 16 bits, le vingt huitième bloc étant vide, et le vingt septième bloc ne contenant que 8 bits utiles. L'étage 35b comporte : une partie 118 réalisant un multiplexage spectral; une partie 120 réalisant le changement de débit par blocs de 16 bits, et une partie 121 réalisant une concaténation des blocs de 16 bits, après le changement de débit. En fait, l'étage 35b traite simultanément seize blocs, de seize couleurs différentes les unes des autres, car il refait un multiplexage spectral sur seize couleurs différentes notées, par exemple, F11, F12, F13, F14, F21,..., F44. La partie 120 restitue chaque cellule sous la forme d'une suite de vingt huit blocs de bits au rythme de 2,6 Gb/s avec des intervalles vides, de durée approximativement égale à trois fois la durée d'un de ces blocs, car le débit est multiplié par quatre environ.

La partie 121 concatène ces blocs et restitue des paquets de seize cellules synchrones. Ces paquets sont séparés par des intervalles vides de durée approximativement égale à trois fois la durée d'une cellule au débit de 2,6 Gb/s.

La partie 118 comporte :
- seize convertisseurs de longueur d'onde, 89′.1 à 89′.16, ayant seize entrées reliées respectivement aux seize fibres 34.1 à 34.16, pour attribuer seize couleurs différentes aux seize cellules fournies par les modules 33.1 à 33.16;
- un combineur, 90′, ayant seize entrées reliées respectivement aux seize des convertisseurs 89′.1 à 89′.16, et une sortie reliée à la partie 120 par une fibre optique unique 119.

La partie 120 comporte :
- un amplificateur optique 91′;
- un jeu de 16 lignes à retard 95′, 96′,..., 97′ procurant chacune un retard égal à une période de bit, Tb, à 622 Mb/s;
- seize coupleurs à trois accès, 92′, 93′,..., 94′;
- un second jeu de lignes à retard 105′, 106′,..., 107′ procurant chacune un retard égal à une période de bit, T′b, à 2, 6 Gb/s;
- seize coupleurs à trois entrées, 108′,..., 109′, 110′;
- seize portes optiques 100′, 101′,..., 102′, 103′;
- un dispositif de commande 111′ commandant en parallèle toutes les portes optiques 100′ à 103′, avec une période égale à la durée de 16 bits au débit de 622 Mb/s.

La structure de cette partie 120 est analogue à la structure de l'étage 35a décrit précédemment, mais les composants sont beaucoup moins nombreux et le rythme de transfert du premier au second registre est 28 fois plus rapide. Par contre, les blocs de 16 bits fournis par la sortie de la partie 120 sont séparés par des intervalles de temps où il n'y a aucun bit, par conséquent chaque cellule n'est pas une suite continue de 424 bits utiles et 24 bits vides.

La partie 121 a pour rôle de rétablir la continuité des bits à l'intérieur de chaque cellule, en réalisant une concaténation des blocs de 16 bits. La partie 121 comporte :
- un diffuseur 122;
- 28 portes optiques 123, 124, ..., 126;
- un dispositif de commande 132 commandant électriquement les portes optiques 123 à 126, indépendamment des unes des autres;
- 28 lignes à retard fixe, 127, 128,..., 129, 130 procurant des retards respectivement égaux à 0.D, 2.D, 3.D, ..., 25.D, 26.D, 27.D où D est la différence de durée entre un bloc de 16 bits au débit de 622 Mb/s et un bloc au débit de 2,6 Gb/s;
- un combineur 131, dont la sortie constitue la sortie de la partie 121 et de l'étage 35;
- un dispositif de commande 132;
- une ligne à retard 133 procurant un retard égal à 24.Tb′.

Le diffuseur 122 possède 28 sorties reliées respectivement à 28 entrées du combineur 131 par l'intermédiaire des 28 portes 123 à 126, en série avec l'une des lignes à retard 127 à 130.

Pour chaque cellule, le premier bloc doit être retardé d'un retard égal à 27.D, le deuxième bloc doit être retardé d'un retard égal à 26.D, etc. Le dispositif de commande 132 commande successivement les portes 123 à 126 pour laisser passer le premier bloc dans la ligne à retard 130, le second bloc dans la ligne à retard 129, etc. Le 28ième bloc est transmis directement par la porte 126 jusqu'au combineur 131. A la sortie du combineur 131 chaque cellule est reformée d'une suite continue de bits. Chaque cellule a une couleur différente parmi 16, et a un débit de 2,6 Gb/s. La ligne à retard 133 a la même fonction que la ligne à retard 112 de l'étage 35a. A ce stade, chaque cellule comporte 424 bits utiles plus 24 bits vides.

Le multiplexage spectral sur 16 couleurs permet d'utiliser très efficacement les étages 33 et 35, mais il ne convient pas pour la commutation dans le réseau de connexion 5. L'étage 37 a pour fonction de multiplexer temporellement ces cellules sur 4 fibres optiques pour constituer 4 multiplex à 2,6 Gb/s, avec une charge de 0,4 erlang, non multiplexés spectralement.

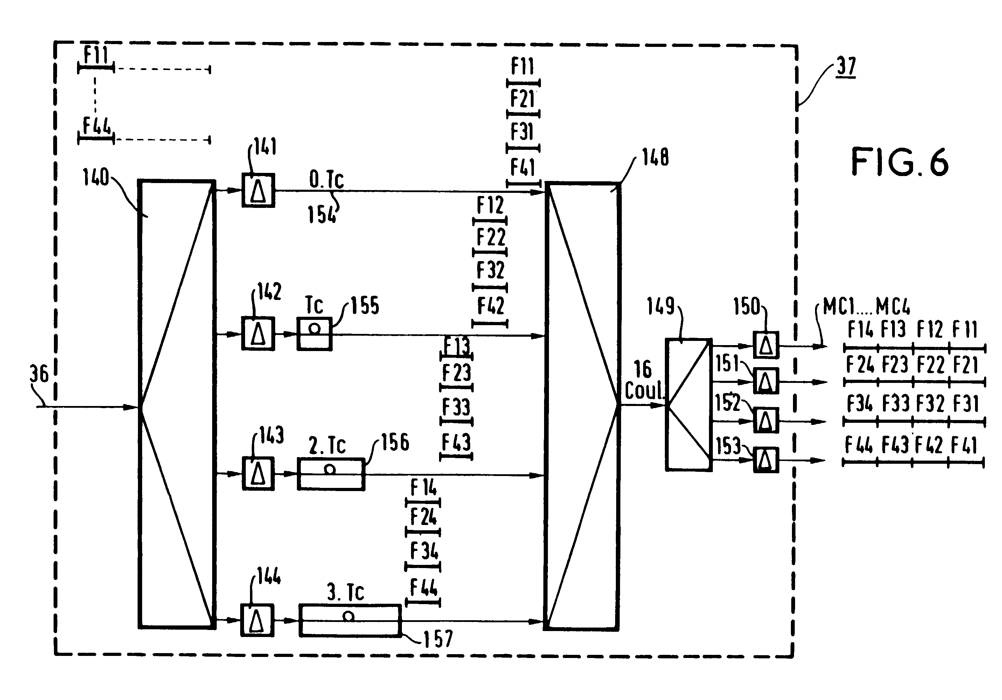

La figure 6 représente le schéma synoptique d'un exemple de réalisation de l'étage 37. Il reçoit des cellules fournies par la fibre 36 sous la forme de 16 cellules en synchronisme, multiplexées par 16 couleurs differentes notées F11, F12, F13, F14, F21,..., F41, F42, F43, F44. Chaque paquet de seize cellules est suivi d'un intervalle vide ayant une durée égale à trois périodes de cellule, au débit de 2,6 Gb/s.

Cet exemple de réalisation comporte :
- un diffuseur 140;
- un filtre périodique 141 laissant passer les couleurs F11, F21, F31, F41;
- un filtre périodique 142 laissant passer les couleurs F12, F22, F32, F42;
- un filtre périodique 143 laissant passer les couleurs F13, F23, F33, F43;
- un filtre périodique 144 laissant passer les couleurs F14, F24, F34, F44;
- quatre lignes à retard 154 à 157 procurant des retards égaux à 0Tc, Tc, 2.Tc, 3.Tc, où Tc est la période de cellule au débit de 2,6 Gb/s;
- un combineur 148;
- un diffuseur 149;
- un filtre passe-bande 150 laissant passer les couleurs F14, F13, F12, F11;
- un filtre passe-bande 151 laissant passer les couleurs F24, F23, F22, F21;
- un filtre passe-bande 152 laissant passer les couleurs F34, F33, F32, F31;
- un filtre passe-bande 153 laissant passer les couleurs F44, F43, F42, F41.

Le diffuseur 140 comporte 4 sorties qui sont reliées respectivement à 4 entrées du combineur 148 par 4 voies constituées respectivement : du filtre 141; du filtre 142 en série avec la ligne à retard 155; du filtre 143 en série avec la ligne à retard 156; et du filtre 144 en série avec la ligne à retard 157. La sortie du combineur 148 est reliée à l'entrée du diffuseur 149. Le diffuseur 149 possède quatre sorties qui sont reliées respectivement à quatre sorties de l'étage 37 respectivement par les filtres 150 à 153, pour fournir les multiplex MC1, ..., MC4.

Les quatre voies qui relient le diffuseur 140 au combineur 148 ont pour fonction de décaler les cellules en quatre paquets de quatre cellules synchrones. La première voie transmet sans retard les cellules de couleur F11, F21, F31, F41. La deuxième voie transmet avec un retard égal une période de cellule, les cellules ayant les couleurs F12, F22, F32, F42. La troisième voie transmet, avec un retard égal à deux périodes de cellule, les cellules ayant les couleurs F13, F23, F33, F43. La quatrième voie transmet avec un retard égal à trois périodes de cellule, les cellules ayant les couleurs F14, F24, F34, F44.

Il apparaît que les cellules de couleur F11, F12, F13, F14 sont devenues successives et jointives dans le temps, il reste à les acheminer sur un multiplex séparé, par rapport aux cellules correspondant aux douze autres couleurs. Le diffuseur 149 a pour fonction de diffuser toutes les cellules de 16 couleurs, vers les quatre filtres 150 à 153 qui les répartissent en quatre multiplex MC1,...,MC4 physiquement séparés sur quatre fibres optiques. Le filtre 150 laisse passer les quatre cellules successives ayant les couleurs F14, F13, F12, F11. Simultanément, le filtre 151 laisse passer les quatre cellules successives ayant les couleurs F24, F23, F22, F21. Simultanément, le filtre 152 laisse passer les quatre cellules successives ayant les couleurs F34, F33, F32, F31. Simultanément, le filtre 153 laisse passer les quatre cellules successives ayant les couleurs F44, F43, F42, F41.

A la sortie de l'étage 37, les cellules gardent leurs diverses couleurs mais celles-ci ne constituent plus un multiplex spectral. Chaque cellule peut-être discriminée par l'intervalle temporel et par le multiplex qui la transporte.

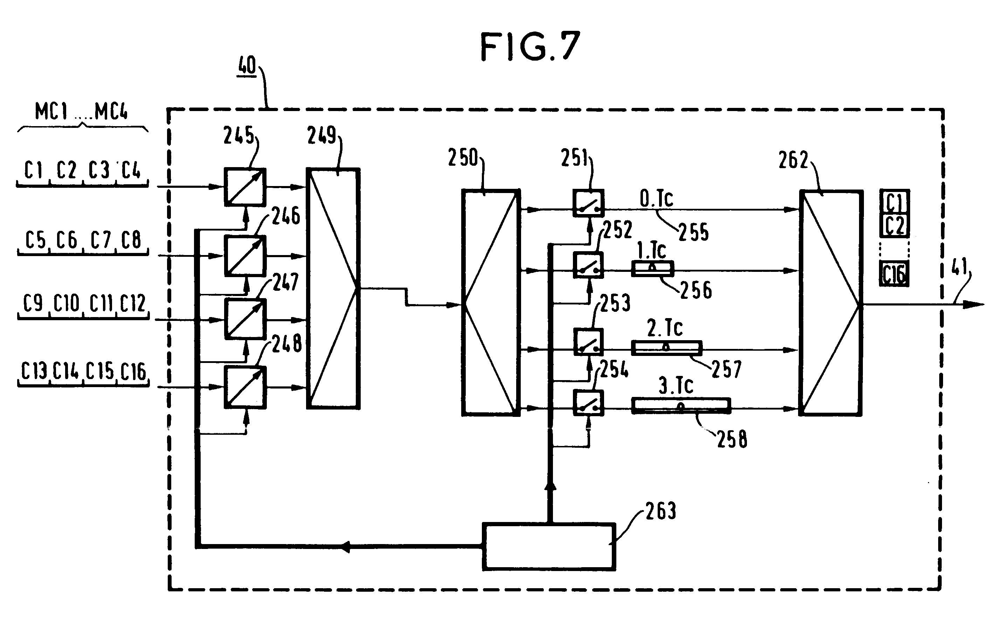

La figure 7 représente le schéma synoptique de l'étage 40 de multiplexage spectral et démultiplexage temporel, du concentrateur 2. Il reçoit sur les quatre multiplex MC1,...,MC4 des cellules avec des couleurs quelconques et un débit de 2,6 Gb/s. Il restitue, sur une fibre optique unique, 41, des paquets de seize cellules synchrones, au moyen d'un multiplexage spectral sur seize couleurs différentes, avec un débit de 2,6Gb/s. Deux paquets successifs de seize cellules sont séparés par un intervalle vide, de durée égale à trois périodes de cellule. Il comprend :
- quatre convertisseurs de longueur d'onde, 245 à 248, ayant quatre entrées reliées respectivement aux quatre multiplex MC1, .. ., MC4;
- un combineur 249 ayant quatre entrées reliées respectivement à quatre sorties des convertisseurs 245 à 248;
- un diffuseur 250 ayant une entrée reliée à la sortie du combineur 249 et ayant quatre sorties;
- portes optiques, 251 à 254, commandables électriquement;
- un jeu de quatre lignes à retard, 255 à 257, procurant des retards respectivement égaux à 0, Tc, 2Tc, 3Tc; où Tc est la période de cellule à 2,6 Gb/s;
- un combineur 262 ayant quatre entrées, et ayant une sortie constituant la sortie de l'étage 40, reliée à la fibre 41,
- un dispositif de commande 263 qui commande chacune des portes 251 à 254 indépendamment, et qui commande chacun des convertisseurs 245 à 248 indépendamment.

Chacune des sorties du diffuseur 250 est reliée respectivement à une entrée du combineur 262 par l'intermédiaire d'une porte, 251, ...,254 et d'une ligne à retard, 255,...,258.

Considérons le démultiplexage temporel :
- d'un paquet de quatre cellules successives, C1, C2, C3, C4, arrivant sur le multiplex MC1;
- d'un paquet de quatre cellules successives C5, C6, C7, C8, arrivant sur le multiplex MC2;
- d'un paquet de quatre cellules successives C9, C10, C11, C12, arrivant sur le multiplex MC3;
- et d'un paquet de quatre cellules successives C13, C14, C15, C16, arrivant sur le multiplex MC4;
ces quatre paquets arrivant simultanément.

Les quatre cellules de chaque paquet sont colorées successivement par l'un des convertisseurs, 245 à 248, de telle sorte que seize couleurs différentes sont attribués aux cellules C1 à C16. L'attribution des couleurs est périodique avec une période égale à quatre périodes de cellule.

Les quatre cellules de chaque paquet sont retardées respectivement d'un retard égal à 0, Tc, 2.Tc, 3.Tc de façon à les rendre synchrones entre elles. Pour cela, chaque porte 251 à 252 est ouverte successivement, pendant la durée d'une cellule, et périodiquement avec une période égale à quatre périodes Tc de cellule. Ainsi les cellules C4, C8, C12, C16, par exemple, sont transmises simultanément par la porte 254 et sont retardées simultanément par la ligne à retard 258, d'un retard égal à 3Tc. Elles arrivent au combineur 262 en même temps que les cellules C1, C5, C9, C13, par exemple, qui sont transmises simultanément par la porte 251 et qui sont transmises avec un retard nul par la ligne 255.

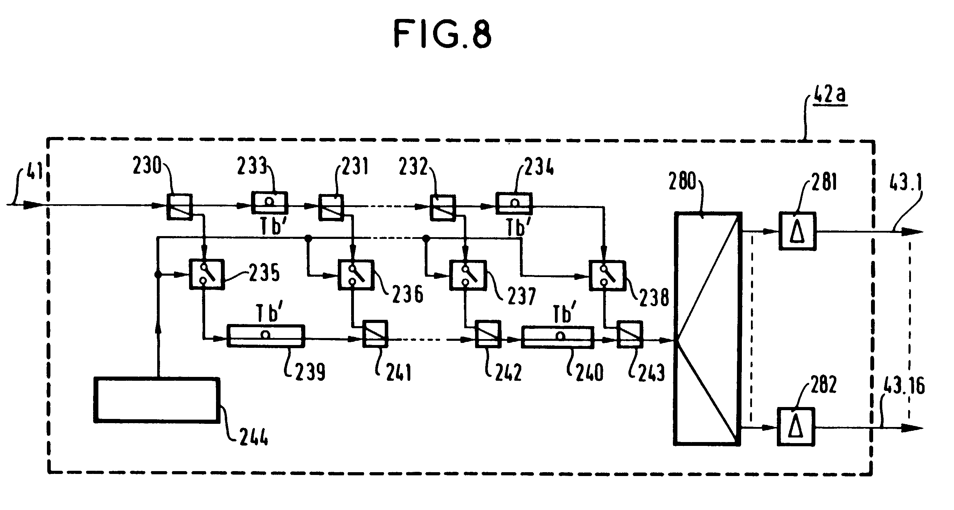

La figure 8 représente le schéma synoptique d'un premier exemple de réalisation, 42a, de l'étage 42 de changement de débit, du concentrateur 2. Cet exemple de réalisation opère cellule par cellule de manière analogue à l'étage 35a représenté sur la figure 7 et décrit précédemment. En fait, il traite simultanément seize cellules, car il reçoit simultanément seize cellules synchrones multiplexées spectralement par seize couleurs différentes.

Chaque cellule comporte 424 bits plus 24 bits d'étiquette de routage, soit 448 bits, à ce niveau du concentrateur 2. Le débit correspondant est donc de 657 Mb/s.

L'étage 42a comprend :
- une première série de 448 lignes à retard, 233,..., 234, procurant chacune un retard T'b égal à la période de bit au débit de 2,6 Gb/s;
- une première série de 448 coupleurs à trois accès, 230, 231,...,232 intercalés dans la première série de lignes à retard en amont de chacune de ces lignes respectivement;
- une seconde série de 448 lignes à retard, 239, ...,240 procurant chacune un retard égal à Tb', la période de bit au débit de 657 Mb/s;
- une seconde série de 448 coupleurs à trois accès, 241,..., 242, 243 intercalés dans la seconde série de lignes à retard, en sortie de chacune de ces lignes;
- 448 portes optiques, 235, 236,..., 237 commandables électriquement;
- un dispositif de commande 244 possédant une sortie commandant simultanément toutes les portes optiques 235, 236,..., 237, 238;
- un diffuseur 210 à seize sorties;
- seize filtres 211,...,212 accordés respectivement sur les 16 couleurs des cellules, ayant seize entrées reliées respectivement aux seize sorties du combineur 210 et ayant seize sorties constituant les seize sorties de l'étage 42a, reliées aux fibres 43.1,...,43.16.

La porte optique 235 relie un troisième accès du coupleur 230 à l'entrée de la ligne à retard 239. La porte optique 236 relie le troisième accès du coupleur 231 au troisième accès du coupleur 241 situé à la sortie de la ligne à retard 239, etc. La porte optique 236 relie un troisième accès du coupleur 231 au troisième accès du coupleur 241 situé à la sortie de la ligne à retard 239. La porte optique 237 relie un troisième accès du coupleur 232 au troisième accès du coupleur 242 situé à l'entrée de la ligne à retard 240. La porte optique 238 relie la sortie de la dernière ligne à retard, 234, de la première série de lignes à retard, au troisième accès du coupleur 243 situé à la sortie de la dernière ligne à retard, 240, de la seconde série de lignes à retard. Un accès du coupleur 230 constitue l'entrée de l'étage 42a et est relié à la fibre optique 41. Un accès du coupleur 243 est relié à une entrée du diffuseur 280.

Les deux séries de lignes à retard sont utilisées comme deux registres à décalage. Lorsqu'une cellule complète est stockée dans la première série de lignes à retard 233, ..., 234, le dispositif de commande 244 commande simultanément toutes les portes optiques 235 à 238 pour transférer simultanément 448 bits dans la seconde série de lignes à retard. Les bits arrivent dans la première série de lignes à retard, 230 à 234, au rythme 2,6 Gb/s et repartent de la seconde de série de lignes à retard, 239 à 240, au rythme de 657 Mb/s, puisqu'ils sont séparés chacun d'un retard égal à Tb'. Le diffuseur 280 et les filtres 281,...,282 démultiplexent spectralement chaque paquet de seize cellules en les répartissant sur seize fibres optiques de sortie, 43.1 à 43.16.

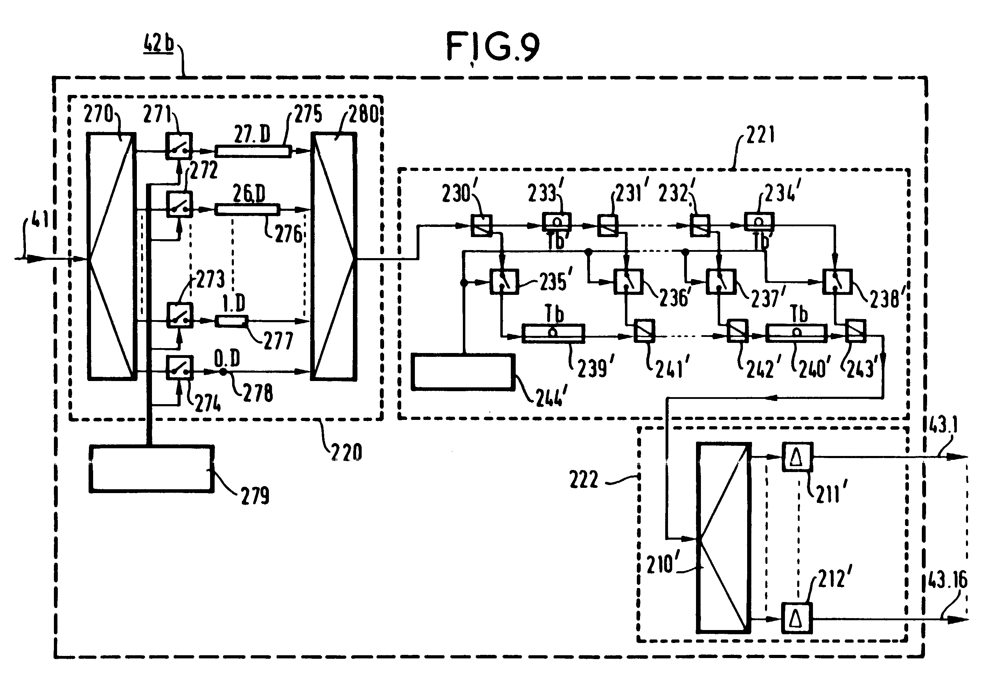

La figure 9 représente le schéma synoptique d'un second exemple de rélisation, 42b, de l'étage 42 de changement de débit, dans le concentrateur 2. Ce second exemple de réalisation est une variante optimisée du premier exemple de réalisation 42a. Les deux séries de 448 lignes à retard sont remplacées par deux séries de 16 lignes à retard, pour opérer un changement de débit par blocs de 16 bits, au lieu d'opérer cellule par cellule, afin de simplifier la réalisation. Cependant, il est nécessaire de découper préalablement les cellules en 28 blocs de 16 bits. L'étage 42b comporte donc : une première partie, 220, découpant chaque cellule en 28 blocs de 16 bits; une seconde partie, 221, réalisant le changement de débit bloc par bloc; et une troisième partie, 222, comportant, un diffuseur 280' et seize filtres 281',...,282' pour démultiplexer spectralement chaque paquet de seize cellules en les répartissant sur seize fibres optiques de sortie, 43.1 à 43.16.

La première partie 220 comporte :
- un diffueur 270 ayant une entrée reliée à la fibre optique 41 fournissant des cellules avec un débit de 2,6 Gb/s, et ayant 28 sorties;
- un combineur 280 ayant une sortie constituant la sortie de la première partie 220, qui est reliée à une entrée de la seconde partie 271, et ayant 28 entrées;
- vingt huit portes optiques commandables électriquement, 271, 272, ..., 273, 274;
- vingt sept lignes à retard, 275,..., 276, 277, 278 procurant des retards respectivement égaux à 27D, 26D,..., D, 0, où D est la différence de la durée d'un bloc de 16 bits au débit de 657 Mb/s, par rapport à sa durée initiale au débit de 2,6 Gb/s;
- un dispositif de commande 279 possédant des sorties reliées respectivement à des entrées de commande des portes optiques 271,..., 274.

Vingt sept sorties du diffuseur 270 sont reliées respectivemnt à l'une des vingt huit entrées du combineur 280 par une voie comprenant en série une porte optique et une ligne à retard.

Le dispositif de commande 279 commande successivement l'ouverture des portes 271, ..., 274, pour transmettre successivement les 28 blocs de 16 bits constituant chaque cellule. Un premier bloc est transmis sans retard, par la porte 274 et la liaison directe. Un deuxième bloc est transmis par la porte 273 pour être stocké et retardé dans la ligne à retard 277 procurant un retard correspondant à un bloc de 16 bits. Un troisième bloc est transmis par une porte, non représentée, dans une ligne à retard, non représentée, procurant un retard correspondant à deux blocs de 16 bits, etc. Le vingt huitième bloc est transmis par la porte 271 pour être stocké dans la ligne à retard 275 pendant une durée correspondant à 27 blocs de 16 bits. Ainsi la première partie 220 transmet des blocs de 16 bits à la seconde partie 221, en les espacant d'un retard correspondant à la durée de 16 bits, ce qui permet de traiter chaque bloc dans la partie 221 en disposant d'un temps libre égal à la durée d'un bloc de 16 bits.

La partie 221 a une structure analogue à celle du premier exemple de réalisation 42a décrit précédemment et représenté sur la figure 14, mais le nombre : de lignes à retard de la première série, 233′, ..., 234′; de coupleurs intercalés dans la première série de lignes à retard 230′, ..., 232′; de portes optiques, 235′,..., 238′; de lignes à retard de la seconde série 239′,..., 240′; et de coupleurs 241′,..., 243′ intercalés dans la seconde série de lignes à retard, est égal à 16 au lieu de 448. Par conséquent la réalisation de cet étage 42b de changement de débit est beaucoup plus simple que celle de l'étage 42a décrit précédemment.

Le diffuseur 210′ et les convertisseurs 211′,..., 212′ jouent les mêmes rôles que les composants ayant la même référence dans l'exemple de réalisation 42a.

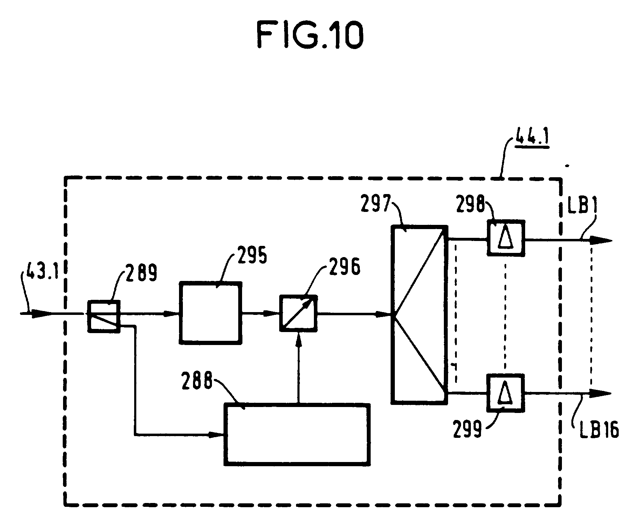

La figure 10 représente le schéma synoptique d'un exemple de réalisation d'un module, 44.1, de l'étage 44 réalisant une deuxième déconcentration par démultiplexage spectral, et un ajustement de débit. Il comporte :
- un coupleur 289 à trois accès;
- un dispositif 295 d'ajustement de débit qui supprime les trois octets d'étiquette de routage et change le débit de 657 Mb/s à 622 Mb/s, de façon à rétablir la continuité des bits après la suppression de l'en-tête de routage;
- un convertisseur de longueur d'onde, 296, ayant une entrée de commande électrique;
- un diffuseur 297, à 16 sorties;
- 16 filtres 298,..., 299, laissant passer respectivement 16 longueurs d'onde fixées, et possèdant des sorties qui constituent les 16 sorties du module 293, reliées aux lignes LB1,...,LB16;
- un dispositif 288 d'extraction d'étiquettes de routage.

Le coupleur 289 possède trois accès : un premier accès constitue l'entrée du module 44.1, un deuxième accès est relié à une entrée du dispositif 295 d'ajustement de débit, et un troisième accès est relié à une entrée du dispositif 288 d'extraction des étiquettes de routage. Ce dernier est de réalisation classique, et a pour fonction de commander le convertisseur de longueur d'onde 296 en lui fournissant un signal électrique sélectionnant une couleur pour donner à une cellule une couleur correspondant au contenu de son étiquette de routage. La sortie du dispositif 295 est reliée à l'entrée du convertisseur de longueur d'onde 296. La sortie de ce dernier est reliée à l'entrée du diffuseur 297. Les 16 sorties du diffuseur 297 sont reliées respectivement aux entrées des 16 filtres 298,...,299. Le filtre correspondant à la longueur d'onde d'une cellule laisse passer cette cellule à destination d'un terminal d'abonné.

Le dispositif d'ajustement de débit 295 ne sera pas décrit plus en détail, il a une structure analogue à celle de la partie 120 de l'étage 35b décrit précédemment et représenté sur la figure 9. Il est à la portée de l'homme de l'art d'adapter cette structure pour réaliser un changement de débit de 657 Mb/s à 622 Mb/s.

## Revendications

1. Concentrateur photonique, pour raccorder à un réseau de télécommunication des terminaux d'abonné émettant et recevant des données sous la forme de cellules, de longueur fixe, par un multiplexage temporel asynchrone, caractérisé en ce que pour traiter des cellules en provenance de terminaux d'abonné, il comporte des moyens (31.1,...,31.16) pour multiplexer temporellement et spectralement des cellules en provenance de terminaux d'abonné; et comporte des moyens (33.1,..., 33.16) pour mettre en phase, par rapport à une horloge locale, les cellules ayant été multiplexées par les moyens (31.1,..., 31.16) pour multiplexer temporellement et spectralement.

2. Concentrateur photonique selon la revendication 1, caractérisé en ce que pour traiter des cellules en provenance de terminaux d'abonné, il comporte en outre :
- des moyens (35) pour multiplexer spectralement les cellules ayant été remises en phase, et pour multiplier leur débit;
- des moyens (37) pour multiplexer temporellement, sans multiplexage spectral, des cellules ayant été restituées par les moyens (35) pour multiplexer spectralement et pour multiplier le débit.

3. Concentrateur photonique selon la revendication 1, caractérisé en ce que, pour traiter des cellules à destination de terminaux d'abonné, il comporte :
- des moyens (40) pour démultiplexer temporellement ces cellules et les multiplexer spectralement;
- des moyens (42) pour diviser le débit des cellules ayant été démultiplexées temporellement et multiplexées spectralement;
- des moyens (42, 44) pour démultiplexer spectralement des cellules dont le débit a été divisé.

4. Concentrateur photonique selon la revendication 3, caractérisé en ce que les moyens (40) pour démultiplexer temporellement et multiplexer spectralement des cellules à destination de terminaux d'abonné, ont un fonctionnement périodique, les cellules fournies audit concentrateur par un réseau de télécommunications, ayant été remises dans un ordre donné, avant d'être fournies audit concentrateur.

## Patentansprüche

1. Lichtsignalkonzentrator, über den mittels asynchroner Zeitmultiplexierung Teilnehmerendgeräte, die Daten in Form von Zellen fester Länge aussenden und empfangen, an ein Fernmeldenetz angeschlossen werden können, dadurch gekennzeichnet, daß zur Bearbeitung der von Teilnehmerendgeräten kommenden Zellen Mittel (31.1, ... 31.16) zur zeitlichen und spektralen Multiplexierung der von den Teilnehmerendgeräten kommenden Zellen und Mittel (33.1, ... 33.16) vorgesehen sind, um die durch die Mittel (31.1, ... 31.16) zur zeitlichen und spektralen Multiplexierung multiplexierten Zellen bezüglich eines örtlichen Taktgebers in Phase zu bringen.

2. Lichtsignalkonzentrator nach Anspruch 1, dadurch gekennzeichnet, daß er zur Bearbeitung der von den Teilnehmerendgeräten kommenden Zellen außerdem aufweist:
- Mittel (35) zur spektralen Multiplexierung der in Phase gebrachten Zellen und zur Erhöhung ihres Durchsatzes,
- Mittel (37) zur zeitlichen Multiplexierung ohne spektrale Multiplexierung der Zellen, die von den Mitteln (35) zur spektralen Multiplexierung geliefert wurden, und zur Vervielfachung des Durchsatzes.

3. Lichtsignalkonzentrator nach Anspruch 1, dadurch gekennzeichnet, daß er zur Behandlung der für die Teilnehmerendgeräte bestimmten Zellen aufweist:
- Mittel (40) zur zeitlichen Demultiplexierung dieser Zellen und zur spektralen Multiplexierung,
- Mittel (42) zur Verringerung des Durchsatzes der zeitlich demultiplexierten und spektral multiplexierten Zellen,
- Mittel (42, 44) zur spektralen Demultiplexierung der Zellen, deren Durchsatz verringert worden ist.

4. Lichtsignalkonzentrator nach Anspruch 3 dadurch gekennzeichnet, daß die Mittel (40) zur zeitlichen Demultiplexierung und spektralen Multiplexierung der für Teilnehmerendgeräte bestimmten Zellen periodisch betrieben werden, wobei die von einem Fernmeldenetz an den Konzentrator gelieferten Zellen in eine bestimmte Reihenfolge gebracht worden sind, ehe sie an den Konzentrator geliefert werden.

## Claims

1. Photonic concentrator for connecting to a telecommunication network subscriber terminals sending and receiving data in the form of fixed length cells using asynchronous time-division multiplexing characterised in that to process cells from subscriber terminals it comprises means (31.1, ..., 31.16) for time-division multiplexing and spectral multiplexing cells from subscriber terminals and means (33.1, ..., 33.16) for synchronising to a local clock cells multiplexed by the time-division and spectral multiplexing means (31.1, ..., 31.16).

2. Photonic concentrator according to claim 1 characterised in that to process cells from subscriber terminals it further comprises:
- means (35) for spectrally multiplexing the resynchronised cells and for multiplying their bit rate; and
- means (37) for time-division multiplexing without spectral multiplexing cells output ly the spectral multiplexing and bit rate multiplier means (35).

3. Photonic concentrator according to claim 1 characterised in that to process cells addressed to subscriber terminals it comprises:
- means (40) for time-division demultiplexing and spectrally multiplexing said cells;
- means (42) for dividing the bit rate of the time-division demultiplexed and spectrally multiplexed cells; and
- means (42, 44) for spectrally demultiplexing cells whose bit rate has been divided.

4. Photonic concentrator according to claim 3 characterised in that the means (40) for time-division demultiplexing and spectrally multiplexing cells to subscriber terminals operate periodically, the cells supplied to said concentrator by a telecommunication network having been sorted into a given order before they are supplied to said concentrator.
